# FASCICULE DE BREVET EUROPEEN

(11) **EP 3 721 703 B1**
(45) Date de publication et mention de la délivrance du brevet: **04.06.2025**
(21) Numéro de dépôt: 19168852.2
(22) Date de dépôt: 12.04.2019
(51) Int. Cl.: A01G 9/24

(54) **SYSTÈME DE CULTURE AUTONOME**
AUTONOMES KULTURSYSTEM
AUTONOMOUS CROP-GROWING SYSTEM

(43) Date de publication de la demande: 14.10.2020
(73) Titulaire: Easy Technic SA, 1630 Bulle (CH)
(72) Inventeur: Guillet, Laurent, 1628 Vuadens (CH); Sonney, Nicolas, 1624 Grattavache (CH)
(74) Mandataire: P&TS SA (AG, Ltd.)

(56) Documents cités:
- EP-A1- 0 517 432
- US-A- 4 331 128
- US-A1- 2018 263 194

## Description

### Domaine technique

La présente invention concerne un système de culture autonome en eau. Le système est particulièrement adapté aux zones arides. En particulier, le système prend la forme d'une serre comportant plusieurs zones distinctes. Les températures et l'hygrométrie peuvent être différentes dans les différentes zones de la serre. L'humidité de l'air extérieur peut y être condensée de manière à assurer l'irrigation des cultures.

### Etat de la technique

La culture sous abri, et notamment sous serre, est bien connue pour permettre la levée des graines hors saison ou pour accélérer la croissance des végétaux. Cette pratique permet d'étendre les périodes de culture aux saisons plus fraiches, notamment au printemps et à l'automne et d'augmenter ainsi la production, grâce à la chaleur captée par la serre. L'irrigation n'est en général pas un problème dans ces conditions.

Dans les zones plus arides, où l'ensoleillement et les températures sont généralement plus élevés, l'utilisation d'une serre pour capter la chaleur semble inutile, voire contreproductive. Les températures naturellement élevées suffisent à la croissance végétale. L'irrigation est cependant le facteur déterminant dans ces conditions.

L'eau étant naturellement peu disponible, il est possible de l'extraire de l'air ambiant par condensation. La condensation de l'air est exploitée dans certaines serres pour recycler l'eau d'irrigation. La demande de brevet CN106094937 donne un exemple, où l'air est chauffé puis condensé. Un tel dispositif n'est pas adapté aux zones arides.

Le modèle d'utilité CN204069955U décrit un dispositif comprenant un système de condensation de l'air basé sur le pompage de l'eau souterraine. Un tel dispositif nécessite la présence de quantités d'eau importantes dans le sous-sol. De plus, l'air chaud traverse la zone de culture avant d'être refroidi sur les plaques de condensation. La température à l'intérieure de la serre peut ne pas être adaptée à la culture des végétaux, en particulier dans les zones arides et chaudes.

La demande de brevet WO2007079774 décrit une serre fermée à double paroi à travers laquelle l'air circule avant d'être refroidi pour en récupérer l'humidité.

La demande de brevet US 4 331 128 A illustre une serre ayant un arrangement comprenant une zone de captage de l'air extérieur, une zone de condensation de l'humidité, une zone de collecte de l'eau de condensation et une zone de culture.

Il apparaît nécessaire de proposer de nouvelles solutions pour la culture, qui soient à la fois économiques et adaptées aux zones arides.

### Bref résumé de l'invention

La présente invention a pour objet un système de culture selon la revendication 1 adapté aux zones arides. Le coût d'exploitation du système de culture selon la présente invention est avantageux. Le système de culture, en plus d'être autonome en eau, peut être autonome en énergie.

En particulier, le système de culture comprend une paroi extérieure délimitant une zone de captage, une zone de condensation, une zone de collecte et une zone de culture. La zone de culture est en contact avec la zone de condensation et séparée de la zone de captage par une première paroi et de la zone de collecte par une seconde paroi. L'air capté dans la zone de captage, puis refroidi dans la zone de condensation s'évacue par la zone de collecte sans contact direct avec les cultures.

La partie supérieure de la première paroi est ajourée ou manquante, de manière à laisser passer l'air capté depuis la zone de captage vers la zone de condensation. L'ajourage de la première paroi est dimensionné de sorte à maintenir une surpression d'air dans la zone de captage.

La zone de condensation comprend une surface de condensation disposée sur le parcours de l'air capté dans la zone de captage. La surface de condensation peut être inclinée vers la zone de collecte, pour y guider l'eau de condensation ainsi que le flux d'air. La surface de condensation est de préférence disposée au-dessus de la seconde paroi, séparant la zone de collecte de la zone de culture.

Selon un mode de réalisation, la surface de condensation correspond à la surface inférieure d'un réservoir de fluide thermique dont la température est maintenue égale ou inférieure à une température de condensation.

La partie de la paroi extérieure en regard de la zone de condensation peut comprendre une couche thermiquement isolante.

Une partie de la paroi extérieure peut être pourvue de panneaux photovoltaïques.

La zone de collecte, de préférence située à l'opposé du système de culture par rapport à la zone de captage, peut être pourvue de conduites d'évacuation d'air pour évacuer l'air capté dans la zone de captage et refroidi dans la zone de condensation.

La zone de collecte peut comprendre une installation de pompage permettant l'irrigation de la zone de culture.

Le système de culture comprend en outre une zone de stockage thermique, comprenant une zone de stockage thermique chaud et une zone de stockage thermique froid, et une pompe à chaleur de type eau/eau.

Le système de culture peut en outre comprendre une unité de commande et au moins un capteur permettant de déterminer au moins un paramètre environnemental, tel que la température ou l'hygrométrie. L'unité de commande peut ainsi piloter de manière automatique ou semi-automatique l'une ou plusieurs de l'installation de pompage, de la pompe à chaleur et du ou des ventilateurs de la zone de captage.

La présente invention a également pour objet un procédé de culture autonome selon la revendication 11 comprenant une étape de captage de l'air, une étape de refroidissement de l'air capté pour en condenser l'humidité et une étape de collecte de l'eau de condensation, où l'air capté, puis refroidi, puis évacué n'entre pas directement en contact avec les cultures.

Le procédé comprend en outre une étape d'irrigation des cultures. Cette étape peut être concomitante ou non concomitante aux étapes de captage, de condensation et de collecte.

Le procédé comprend en outre une étape de régulation thermique effectuée au moyen d'une zone de stockage thermique. La zone de stockage thermique peut comprendre une zone de stockage thermique chaud et une zone de stockage thermique froid. Les températures respectives de zones de stockage thermique chaud et froid sont maintenues ou rétablies au moyen d'une pompe à chaleur eau/eau.

### Brève description des figures

Des exemples de mise en œuvre de l'invention sont indiqués dans la description illustrée par les figures annexées :

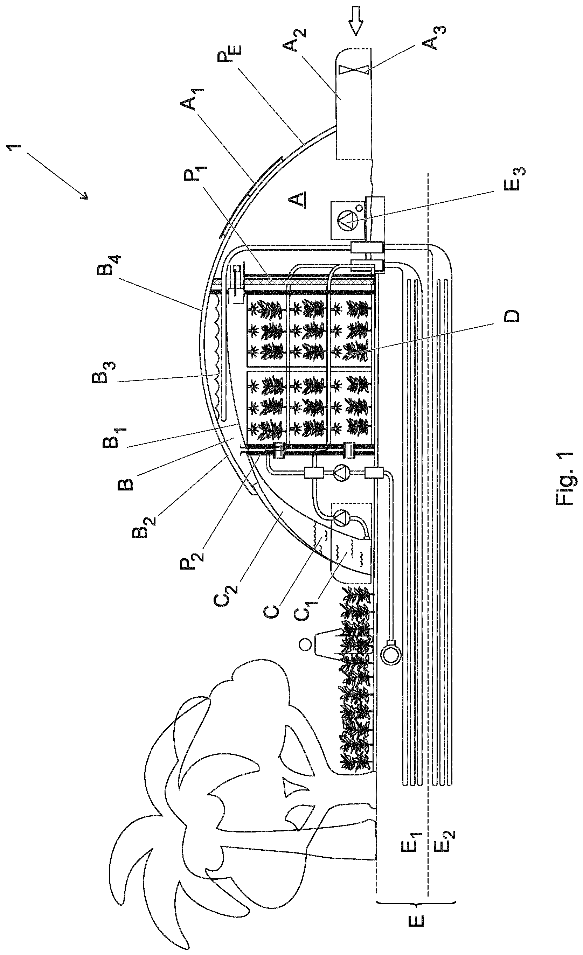

- Figure 1 : Vue schématique du système de culture

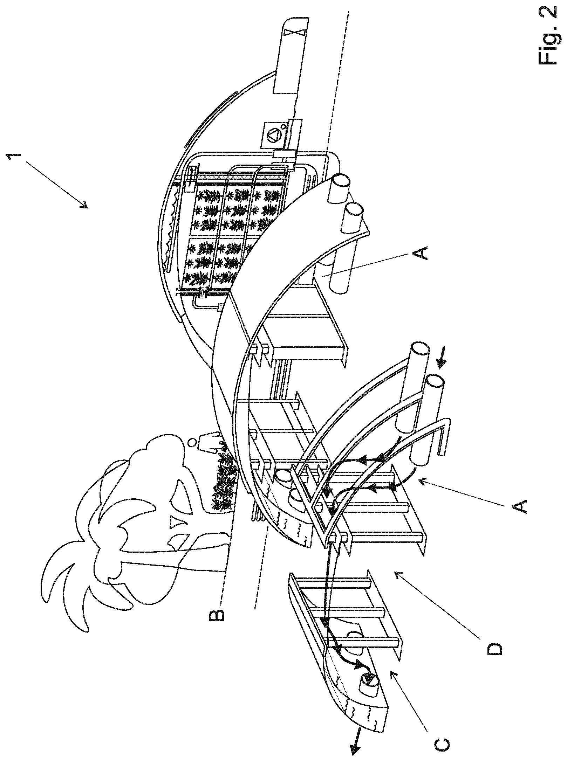

- Figure 2 : Vue éclatée du système de culture

### Exemple(s) de mode de réalisation de l'invention

La serre **1** selon la présente invention délimite un espace de culture dont l'irrigation permet de limiter ou d'éviter les apports d'eau externes. La serre 1 peut être de type tunnel, avec une paroi extérieure **PE** en arc de cercle. Cependant, d'autres formes peuvent être envisagées.

Le système de culture **1** comporte une zone de captage **A,** délimitée par une partie de la paroi extérieure **PE** de la serre **1** et par une paroi **P1** interne au système de culture **1.** La zone de captage A est dédiée au captage de l'air extérieur au système de culture **1,** notamment au moyen d'une ou plusieurs conduites d'air **A2.** Un ou plusieurs ventilateurs **A3** sont avantageusement exploités pour aspirer l'air extérieur dans la zone de captage **A** à travers les conduites d'air **A2.** La zone de captage **A** peut par exemple s'étendre sur toute la longueur de la serre **1.** Alternativement, la zone de captage **A** peut être limitée à une fraction de la longueur totale du système de culture **1,** telle que la moitié, le tiers, le quart, de la longueur du système de culture **1.** Selon d'autres arrangements possibles, la zone de captage **A** peut comprendre plusieurs espaces distincts, de préférence disposés du même côté du système de culture **1.** Les volumes d'air captés peuvent ainsi être modulés en fonction des besoins du système de culture **1** et de son environnement.

Le diamètre des conduites d'air **A2** de la zone de captage **A** sont dimensionnés en fonction des volumes d'air à capter, de même que le nombre de ces conduites d'air **A2.** La vitesse des ventilateurs **A3** peut être modulée de manière à pouvoir adapter le débit d'air entrant dans la zone de captage **A.** Par exemple, le débit d'air entrant peut être modulé entre 0 et 100 m³/s/ha, en fonction des conditions environnementales et des besoins du système de culture **1.** Le débit d'air peut être régulé en fonction de la température extérieure **TE.** Il peut être interrompu par exemple lorsque la température extérieure **TE** passe sous un seuil prédéterminé **TS.** La valeur du seuil peut être déterminée à 18°C, 20°C, 22°C, 24°C ou 26° en fonction des besoins. La valeur seuil **TS** peut en outre varier suivant les périodes du jour ou de la nuit ou du moment dans l'année.

Les débits d'air entrants, lorsque la température extérieure **TE** est supérieure à la valeur seuil **TS,** peuvent également être modulés à des valeurs prédéterminées en fonction de la température extérieure **TE.** Par exemple un débit d'air entrant compris entre 20 et 60 m³/s/ha, ou entre 30 et 50 m³/s/ha peut être envisagé pour température extérieure **TE** comprise entre la valeur seuil **TS** et une valeur plafond **TP1,** supérieure à la valeur seuil **TS.** Un débit d'air supérieur à 60 m³/s/ha peut être prédéterminé dans le cas où la température extérieure dépasse la valeur plafond **TP1.** La valeur plafond peut être prédéterminée à 26°C, ou 28°C, ou 30°C ou plus élevée. Optionnellement, une seconde valeur de température plafond **TP2,** supérieure à la première température plafond **TP1,** peut être envisagée. Le débit d'air peut ainsi être accru, par exemple de manière à dépasser 80 m³/s/ha. La seconde valeur de température plafond peut être par exemple de 32°C, ou 34°C ou égale ou supérieure à 36°C. Alternativement, le débit d'air entrant peut être réduit au-dessus de la seconde valeur de température plafond **TP2** pour éviter d'apporter trop de chaleur au sein du système de culture **1.**

Les valeurs de température seuil **TS,** température plafond **TP1** et seconde température plafond **TP2** peuvent bien sûr être différentes de celles indiquées ici, en fonction de l'environnement climatique et du type des cultures.

D'autres paramètres environnementaux peuvent être considérés pour la gestion des flux d'air. Le degré d'hygrométrie **HE** de l'air extérieur peut en l'occurrence être pris en compte dans la modulation du débit d'air. Le débit d'air peut être accru lors d'une hygrométrie élevée, par exemple au-dessus d'un certain seuil **H1.** De cette manière l'humidité de l'air est exploitée au mieux avec un minimum d'apport de chaleur dans le système de culture **1.**

La température **TC** de la zone de captage peut être égale ou supérieure à la température extérieure **TE,** notamment dû à l'ensoleillement du système de culture **1.** Avantageusement, la température de la zone de captage **A** est supérieure à la température extérieure **TE** et génère un courant ascendant de l'air au sein de la zone de captage **A.** La paroi extérieure **PE** peut être conçue pour laisser pénétrer une large proportion du rayonnement solaire dans la zone de captage **A** de manière à chauffer l'air entrant. La totalité de la surface de la paroi extérieure **PE** correspondant à la zone de captage **A** peut alors être transparente à la lumière naturelle. Alternativement 80% ou 60% ou 50% ou moins de la surface de la paroi extérieure **PE** peut être transparente à l'ensoleillement. L'hygrométrie **HA** de la zone de captage **A** est élevée. En particulier l'humidité relative entre la zone de captage **A** et celle de la zone de condensation **B** est supérieure à 100%. La pression d'air dans la zone de captage **A** est égale ou supérieure à la pression atmosphérique extérieure au système de culture **1.** Pour se faire, la zone de captage **A** comporte peu d'ouvertures. En particulier, la surface ouverte de la zone de captage **A** est insuffisante pour permettre l'équilibre des pressions d'air entre la zone de captage **A** est l'extérieur du système de culture **1.** De manière préférentielle, les seules ouvertures présentes dans la zone de captage **A** sont disposées de manière à laisser transiter l'air entrant dans la zone de condensation B.

L'air aspiré dans la zone de captage **A,** à une température supérieure à la valeur seuil **TS,** est canalisé dans la zone de condensation **B.** Le passage de l'air de la zone de captage A à la zone de condensation **B** peut s'effectuer par une ou plusieurs ouvertures dans la paroi **P1,** séparant la zone de captage **A** du reste du système de culture **1.** Le flux d'air entrant n'est ainsi pas directement envoyé dans l'espace de culture mais canalisé vers la zone de condensation **B.** De telles ouvertures sont de préférence disposées dans une partie supérieure de la paroi **P1** ou à la jonction entre la paroi **P1** et la paroi extérieure **PE.** Selon un arrangement particulier, la hauteur de la paroi interne **P1** peut être déterminée de manière à ce que la paroi interne **P1** ne rejoigne pas la paroi extérieure **PE** du système de culture **1** et laisse ainsi un ajourage continu permettant à l'air entrant de transiter de la zone de captage **A** vers la zone de condensation **B.** Le ou les ventilateurs **A3** permettent de pousser l'air entrant vers ces ouvertures, grâce à la surpression qu'ils créent dans la zone de captage **A.** Alternativement, ou en plus, un système de ventilation peut être installé entre la zone de captage **A** et la zone de condensation **B** de manière à faciliter les flux d'air. Suivant une autre variante, le ou les ventilateurs **A3** peuvent être disposés entre la zone de captage **A** et la zone de condensation **B** plutôt qu'au niveau de la paroi extérieure **PE** du système de culture **1.** La zone de captage **A** pourrait alors être en légère dépression du fait de l'aspiration de l'air. Des conduites d'aération peuvent optionnellement être installées entres les zones de captage **A** et de condensation **B.**

La zone de condensation **B** comporte une surface de condensation **B1.** La surface de condensation **B1** est une surface maintenue à une température de condensation **TC** inférieure à la température de l'air extérieur **TE.** La surface de condensation **B1** peut se présenter par exemple sous la forme d'une ou plusieurs lames métalliques parcourues par un fluide thermique dont la température est égale ou inférieure à la température de condensation **TC.** Il est admis que plus la surface d'échange est importante, meilleure sera l'efficacité de la condensation. Un ensemble de canalisation parcourue par un fluide thermique dont la température est égale ou inférieure à la température de condensation **TC** peut suffire.

Alternativement, la surface de condensation **B1** peut être la paroi extérieure d'un réservoir **B3** comprenant une quantité de fluide thermique dont la température est inférieure ou égale à la température de condensation **TC.** La quantité de fluide thermique y est alors suffisamment importante pour rester à une température égale ou inférieure à la température de condensation **TC** pendant au moins 24h, voire 2 jours. Le fluide thermique peut être de l'eau, provenant d'une source dont la température est naturellement inférieure ou égale à la température de condensation **TC,** ou bien artificiellement refroidie.

La zone de condensation **B** est de préférence thermiquement isolée de sorte à maintenir la température de la surface de condensation **B1** sous le seuil désiré le plus longtemps possible. En particulier, la portion de la paroi extérieure **PE** délimitant la zone de condensation **B** est pourvue d'une couche d'isolation **B4.** La paroi extérieure **PE** correspondant à la zone de condensation **B** est avantageusement totalement ou partiellement opaque au rayonnement solaire, de manière à limiter l'apport de chaleur extérieur.

La température de condensation **TC** peut être par exemple comprise entre 0°C et 15°, ou entre 1°C et 10°C, de préférence entre 3°C et 5°C. Lorsque l'air issu de la zone de captage A entre en contact avec la surface de condensation **B1,** l'humidité contenue dans l'air se condense sur la paroi de condensation **B1.** La surface de condensation **B1** est de préférence située dans une partie supérieure du système de culture **1** de manière à laisser couler l'eau condensée par gravitation.

Selon un mode de réalisation, la zone de condensation **B** comporte un réservoir **B3** d'eau froide, dont la température est inférieure ou égale à la température de condensation **TC,** disposé en partie supérieure du système de culture **1.** La surface inférieure du réservoir **B3** fait office de surface de condensation **B1.** Elle est disposée sur le parcours de l'air issu de la zone de captage **A.** L'eau froide contenue dans le réservoir **B3** peut provenir par exemple du sous-sol ou bien d'une réserve naturelle tel qu'un lac ou une rivière. L'eau du réservoir **B3** peut alternativement être refroidie au moyen d'un circuit de refroidissement, comprenant notamment une pompe à chaleur. Le réservoir **B3** peut être ouvert en sa partie supérieure, de manière à laisser transiter à la surface de l'eau contenue dans le réservoir **B3** un coussin d'air, isolant de la chaleur extérieure.

La zone de condensation **B** se situe de préférence au-dessus de la zone de culture **D** du système de culture **1,** de manière à pouvoir condenser l'humidité issue de l'évapotranspiration des végétaux. De préférence la surface de condensation **B1** chapote la zone de culture **D,** au moins partiellement. Ainsi, l'humidité de l'air ambiant et l'humidité de l'air capté dans la zone de captage **A** sont condensées sur la surface de condensation **B1.**

La surface de condensation **B1** est de préférence inclinée de manière à guider l'eau de condensation à l'extérieur de la zone de culture **D,** vers la zone de collecte **C.** Il n'est cependant pas exclu que la surface de condensation **B3** comporte une partie inclinée vers la zone de culture **D** de manière à redistribuer une partie de l'eau condensée directement aux cultures sans passer par un stockage intermédiaire. La surface de condensation **B3** peut alors être conçue pour distribuer 10% ou 20% ou 50% ou plus de l'eau condensée directement dans la zone de culture **D.** Alternativement, la surface de condensation **B3** peut être modulable de manière à laisser passer une part variable de l'eau de condensation **B3** vers la zone de collecte **C.**

La zone de collecte C est un espace délimité par une paroi **P2** interne au système de culture **1** et la paroi extérieure **PE** du système de culture **1.** La zone de collecte **C** se situe de préférence sur le côté de la serre apposé à la zone de captage **A.** La zone de collecte **C** peut par exemple s'étendre sur toute la longueur du système de culture **1.** Alternativement, la zone de collecte **C** peut être limitée à une fraction de la longueur totale du système de culture **1,** telle que la moitié, le tiers, le quart, de la longueur de la serre **1.** Selon d'autres arrangements possibles, la zone de collecte **C** peut comprendre plusieurs espaces distincts, de préférence disposés du même côté du système de culture **1.** La paroi **P2,** séparant la zone de collecte **C** du reste du système de culture **1,** est disposée de sorte de ne pas entrer en contact avec la surface de condensation **B1,** pour laisser s'écouler l'eau de condensation depuis la zone de condensation **B** vers la zone de collecte **C.** L'eau de condensation est collectée dans un réservoir d'irrigation **C1.**

La zone de collecte **C** comporte une ou plusieurs évacuations d'air **C3** pour permettre à l'air capté dans la zone de captage **A** puis refroidi dans la zone de condensation **B,** de s'évacuer vers l'extérieur. L'air refroidi génère un courant descendant dans la zone de captage **C** et peut être évacué par des ouvertures situées en position basse de la zone de collecte. Le flux d'air depuis la zone de captage **A** vers la zone de collecte **C** obéit alors naturellement aux courants ascendants puis descendant, et passe au-dessus des parois internes **P1** et **P2** qui encadrent les cultures de la zone de culture **D.** Les évacuations d'air **C3** peuvent prendre la forme de simples ouvertures, optionnellement pourvue de grilles, ou bien de conduites d'évacuation. Un ou plusieurs ventilateurs peuvent optionnellement être prévus de manière à faciliter l'évacuation d'air. La température de la zone de collecte influence peu le fonctionnement de la serre. L'hygrométrie de la zone de collecte **HC** est en revanche inférieure à l'hygrométrie **HA** de la zone de captage **A** et inférieure ou égale à L'hygrométrie **HB** de la zone de condensation **B.**

Le réservoir d'irrigation **C1** peut être disposé dans la zone de collecte **C** du système de culture **1** ou dans une autre zone du système de culture ou à l'extérieur du système de culture. Alternativement, le réservoir d'irrigation **C1** peut être partiellement ou totalement enterré, soit sous le système de culture **1,** soit à proximité du système de culture **1.** L'eau de condensation peut être collectée directement depuis la surface de condensation **B1** vers le réservoir d'irrigation **C1** ou bien être collectée par des collecteurs intermédiaires (non représentés) puis acheminée vers le réservoir d'irrigation par une ou plusieurs conduites. L'acheminement se fait de préférence par gravitation.

Le réservoir d'irrigation **C1** est de préférence fermé pour éviter que l'eau qui y est stockée ne s'évapore. Le réservoir d'irrigation est connecté à une installation de pompage **C2,** permettant de distribuer l'eau du réservoir d'irrigation **C1** vers les cultures internes à la serre **1** et éventuellement celles qui se trouvent à proximité de la serre **1.** L'installation de pompage **C2** comprend en particulier une ou plusieurs pompes, de préférence de type pompe électrique, et un réseau de canalisations permettant de distribuer l'eau d'irrigation vers les cultures. L'irrigation peut s'effectuer par écoulement au sol ou bien par aspersion via des buses d'arrosage au-dessus des cultures, ou par goutte à goutte, ou par une combinaison de ces différentes techniques. Pour ce faire, l'installation de pompage comporte les buses d'aspersion ou les dispositifs de goutte à goutte adéquats. L'aspersion inclue la brumisation pour maintenir une hygrométrie déterminée.

Le réservoir d'irrigation **C1** peut en outre être connecté à d'autres conduites de collecte d'eau, permettant par exemple de collecter les eaux de pluie. A cet effet le système de culture **1** peut être pourvu de gouttières ou de dispositifs similaires permettant de collecter l'eau qui ruisselle ponctuellement sur la paroi extérieure **PE** lors d'orages ou de précipitations ponctuelles.

L'installation de pompage **C2** comporte une ou plusieurs vannes permettant de moduler la distribution d'eau vers des aires spécifiques. Les vannes peuvent par exemples permettre de sélectionner entre une irrigation au sol interne au système de culture **1** et une irrigation au sol à l'extérieur du système de culture **1.** Elles peuvent alternativement ou en plus permettre de sélectionner entre un arrosage par aspersion et une irrigation au sol à l'intérieur du système de culture **1.** Le système de vannes peut en plus permettre d'ouvrir ou fermer le réseau de collecte d'eau, ou une partie du réseau de collecte d'eau. En l'occurrence la collecte de l'eau de condensation ou bien la collecte des eaux de ruissellement, ou les deux, peut être interrompue ou modulée. Cela peut être nécessaire en cas de fortes précipitations notamment, ou lorsque le réservoir d'irrigation **C1** arrive à saturation.

L'installation de pompage **C2** peut en outre comprendre une sonde de niveau d'eau permettant de jauger le réservoir d'irrigation **C1.** Elle peut en plus comprendre un ou plusieurs manomètres permettant de déterminer les pressions d'eau le cas échéant, notamment dans le réseau de distribution par aspersion.

Le système de culture **1** comporte une zone de culture **D,** où sont cultivées les espèces végétales. La zone de culture **D** est de préférence disposée entre les parois internes **P1** et **P2** du système de culture **1** et sous la zone de condensation **B** ou en contact direct avec la zone de condensation **B.** En d'autres termes, la zone de culture **D** est en position centrale dans le système de culture **1.** La zone de culture **D** peut par exemple s'étendre sur toute la longueur du système de culture **1.** Alternativement, la zone de culture **D** peut être limitée à une fraction de la longueur totale du système de culture **1,** telle que la moitié, le tiers, le quart, de la longueur du système de culture **1.** Selon d'autres arrangements possibles, la zone de culture **D** peut comprendre plusieurs espaces distincts où les températures ou l'hygrométrie ou les deux de ces paramètres peuvent être modulés indépendamment d'un espace de culture à l'autre.

La zone de culture **D** peut être aménagée de sorte à cultiver en pleine terre dans le sol du système de culture **1.** Alternativement, la zone de culture **D** est aménagée de manière à produire des cultures hors sol, pouvant être étagées sur plusieurs niveaux. Les différents espaces de cultures, le cas échéant, permette de conjuguer une culture hors sol et une culture en pleine terre dans le même système de culture **1.**

Selon une disposition particulière, la zone de culture **D** représente un espace central au système de culture **1,** elle s'étend sur toute sa longueur parallèlement aux zones de captage **A** et de collecte **C,** et elle est chapotée au moins partiellement par la surface de condensation **B1.**

Alternativement, si l'une ou l'autre des zones de captage **A** et de collecte **C** ou les deux ne s'étendent que sur une portion de la longueur du système de culture **1,** les espaces non occupés par ces zones de captage **A** et de collecte **C** le sont par la zone de culture **D.** Il est alors possible que la zone de culture **D** s'étende sur toute la largeur du système de culture **1** à certains endroits.

La zone de culture **D** peut être pourvue de plusieurs instruments de mesure tels que thermomètre et hygromètre, de manière à suivre les conditions environnementales des cultures et au besoin à moduler les flux d'air entrant, le degré et le mode d'irrigation, ainsi que d'autres paramètres de culture.

Lorsque la zone de culture **D** est scindée en plusieurs espaces de culture distincts, la température **TD** et l'hygrométrie **HD** de chacun des espaces de cultures ainsi définis peuvent être modulées séparément. En particulier, la température **TD1** et l'hygrométrie **TD1** d'un premier espace de culture **D1** peuvent être différentes de la température **TD2** et/ou de l'hygrométrie **HD2** d'un seconde espace de culture **D2.** La température **TD** et l'hygrométrie **HD** de la zone de culture **D** peut varier par rapport aux paramètres correspondants des zones de captage A et de collecte **C.**

La paroi extérieure **PE** du système de culture **1** peut être adaptée à la configuration du système de culture **1.** En particulier, la paroi extérieure **PE** peut comprendre une couche isolante **B4** au niveau de la ou des zones de condensation **B.** Les couches isolantes **B4** sont le plus souvent opaques à la lumière du jour. Il convient alors d'aménager dans la paroi extérieure **PE** des zones transparentes de manière à laisser la lumière naturelle pénétrer dans la zone de culture **D.** Alternativement, un dispositif d'éclairage artificiel peut être prévu. Alternativement, un ensemble de loupes inversée peut être prévu sur la paroi extérieure **PE** de manière à permettre une luminosité naturelle suffisante, notamment lorsque l'ensemble de la paroi extérieure **PE** est opaque à la lumière. La paroi PE du système de culture 1 peut être confectionnée en toute matière rigide ou semi-rigide. La paroi extérieure PE peut être par exemple en matière souple telle qu'une bâche. De préférence, la paroi extérieure PE est enterrée au pied du système de culture 1 sur une profondeur d'au moins 10 cm, voir 20 cm ou plus pour permettre une meilleure isolation thermique. Selon un mode de réalisation privilégié, la paroi extérieure **PE** est entièrement isolée thermiquement au moyen d'une couche d'isolant thermique d'au moins 3 cm, voir 5 ou 10 cm d'épaisseur.

La surface de condensation **B1** peut être en contact avec la zone de culture **D** seulement sur une portion de la zone de culture **D,** de sorte que la paroi extérieure **PE** puisse laisser la lumière naturelle entrer dans la zone de culture **D.** Par exemple, la zone de culture **D** peut être à demi couverte par la surface de condensation **B1** et à demi couverte par la paroi extérieure **PE,** qui est transparente, ou partiellement transparente.

La paroi extérieure **PE** peut en outre être pourvue de panneaux solaires **A1.** Les panneaux solaires **A1** peuvent être disposés sur la surface comprenant la couche isolante **B4** ou sur une autre partie de la paroi **PE.** Les panneaux solaires sont de préférence disposés à des endroits qui ne portent pas préjudice au rayonnement reçu par la zone de culture **D.** Les panneaux solaire **A1** sont par exemple disposés au niveau de la zone de captage **A** ou bien au niveau de la zone de collecte **C.** Alternativement, les panneaux solaires **A1** peuvent être disposés à proximité du système de culture **1.** De préférence, les panneaux solaires **A1** sont disposés à proximité du système de culture **1** de manière à limiter l'ensoleillement du sol au pied du système de culture 1. Les échanges thermiques via le sol sont ainsi limités.

Les panneaux solaires **A1** sont de préférence de type photovoltaïque de manière à faire fonctionner l'appareillage électrique du système de culture **1.** La quantité et le dimensionnement des panneaux solaires **A1** dépendent des besoins énergétiques de l'appareillage du système de culture **1.** Ils peuvent être assortis de moyens de stockage de l'électricité tels que des batteries. L'installation de pompage, la pompe à chaleur, les ventilateurs présents dans le système peuvent alors être alimentés électriquement. Alternativement ou en plus, des panneaux solaires thermiques peuvent être prévus pour chauffer une partie de l'eau collectée. En particulier l'eau chauffée au moyen de tels panneaux peut être utilisée par la pompe à chaleur pour générer du froid. Alternativement, l'eau ainsi chauffée peut être mise en circulation dans la zone de stockage thermique chaud **E1.**

La paroi extérieure **PE** peut comprendre une ou plusieurs parties amovibles ou articulée, formant des ouvertures pouvant être ouvertes ou fermées. Lorsque la température intérieure est jugée trop élevée, la paroi extérieure **PE** peut alors être ouverte. En cas d'espaces de culture distincts, chacun des espaces de culture peut être pourvu d'une ou plusieurs de ses parties amovibles ou articulées.

L'une ou l'autre ou les deux parois intérieures **P1** et **P2** peuvent être transparentes, partiellement transparentes ou opaques à la lumière naturelle. Elles peuvent être en outre thermiquement isolés de manière à limiter les échanges thermique avec les zone de captage **A** et de collecte **C.**

Le système de culture **1** peut en outre comprendre une zone de stockage thermique **E.** Cette zone de stockage thermique **E** permet de moduler les paramètres hygrométriques et thermiques du système de culture **1.** La zone de stockage thermique **E** définit une zone où l'énergie thermique y est constante ou substantiellement constante, et peut ainsi être exploitée pour réguler les échanges thermiques à l'intérieur du système de culture **1** sans pour autant que son potentiel énergétique en soit modifié. La zone de stockage thermique désigne par exemple l'énergie géothermique. Elle peut alternativement correspondre à une réserve d'eau naturelle dont la température est constante ou varie seulement de quelques degrés.

La zone de stockage thermique **E** peut comprendre une première zone **E1** de stockage thermique chaud. Cette première zone de stockage thermique **E1** chaud est de préférence la zone terrestre sous-jacente au système de culture **1.** L'énergie thermique emmagasinée durant les heures ensoleillées peut suffire à maintenir la température dans le système de culture durant la nuit, ou à en limiter sa diminution. La zone **E1** de stockage thermique chaud est de préférence à une température comprise entre 20°C et 25°C. Un fluide thermique peut être mis en circulation à travers cette zone de stockage thermique **E1** puis transiter dans l'espace de culture **D** du système de culture **1** pour en maintenir la température.

Alternativement, la zone de stockage thermique chaud **E1** est maintenue artificiellement à une température comprise entre 20°C et 25°C.

La zone de stockage thermique **E** peut en outre comprendre une zone de stockage thermique froid **E2.** La zone de stockage thermique froid **E2** peut être par exemple une réserve d'eau naturelle telle qu'un lac ou une rivière. Sa température est typiquement de l'ordre de quelques degrés au-dessus de 0°C, voire comprise entre 4°C et 8°C. Dans ce cas, l'eau de la zone de stockage thermique froid peut être pompée et utilisée pour la condensation de l'air dans la zone de condensation **B.** Alternativement, un fluide thermique peut être mis en circulation à travers la zone de stockage thermique froid **E2** puis dans la zone de condensation pour en maintenir la température suffisamment basse.

Alternativement, la zone de stockage thermique froid **E2** est maintenue artificiellement à des températures de l'ordre de quelques degrés au-dessus de 0°C, voire entre 4°C et 8°C.

Les zones de stockage thermique chaud **E1** et froid **E2** peuvent être maintenues artificiellement à leur température respective grâce à une pompe à chaleur de type eau/eau. Des circuits d'eau traversant les deux zones de stockage thermique chaud **E1** et froid **E2** permettent alors à la pompe à chaleur de transférer les calories de l'une à l'autre de ces zones pendant les périodes nocturnes pour pouvoir les exploiter durant les périodes d'ensoleillement. De préférence la pompe à chaleur est de type réversible. La pompe à chaleur est avantageusement enterrée pour se prémunir de la chaleur ambiante, à une profondeur d'un mètre ou plus, voire 3 mètres ou plus. La pompe à chaleur peut être utilisée pour la fabrication de glace, entreposée sous terre à la même profondeur, qui pourrait être distribuée dans le système durant les heures chaudes, notamment pendant la journée.

Les conduites connectées à la pompe à chaleur sont de préférence thermiquement isolées, en particulier les conduites d'eau froide permettant d'acheminer l'eau froide à la zone de condensation **B.**

Le système de culture 1 peut en outre comprendre une unité de commande **UE** (non représentée) permettant de piloter les différents organes en fonction de paramètres prédéterminés. Les paramètres considérés peuvent être déterminés au moyen de capteur adaptés. La température et l'hygrométrie de la zone de culture **D** peuvent par exemple être déterminées, soit de manière continue soit à intervalle de temps régulier. La température extérieure **TE** peut être déterminée, soit de manière continue soit à intervalle de temps régulier. L'unité de commande **UE** contient au moins un module de calcul permettant de déterminer si la température extérieure **TE** est supérieure ou inférieure à une température seuil **TS,** ou supérieure ou inférieure à une température plafond **TP1,** ou supérieure ou inférieure à une seconde température plafond **TP2.** Un ou plusieurs capteurs de débit d'air peuvent être installés dans la ou les conduites d'air **A2.** Le ventilateur **A3** peut être connecté à l'unité de commande **UC** de manière à être piloté automatiquement en fonction des paramètres mesurés et des données calculées par l'unité de commande UC. Une jauge de niveau d'eau peut être installée dans le réservoir d'irrigation **C1** et reliée à l'unité de commande **UC.** Une ou plusieurs vannes de l'installation de pompage peuvent également être connectées à l'unité de commande **UC** et pilotées automatiquement en fonction du niveau d'eau mesuré dans le réservoir d'irrigation **C1.** Un thermomètre peut être installé dans la zone de condensation **B** pour en déterminer la température de la surface de condensation **B1** ou celle du stock de fluide thermique le cas échéant, et connecté à l'unité de commande **UC.** La pompe à chaleur peut également être connectée à l'unité de commande **UC** et être activées automatiquement en fonction de la température mesurée dans la zone de condensation **B,** notamment si la température mesurée dépasse la température de condensation **TC.**

La présente invention couvre également une méthode de régulation thermique dans le système de culture **1,** de sorte à la rendre autonome en eau. La méthode comprend notamment une première étape **S1** de captage de l'air extérieur au système de culture **1.** Le captage de l'air est effectué au moyen d'une zone de captage **A,** telle que décrite ci-dessus. L'air est capté à une température extérieure TE supérieure à un seuil **TS** prédéterminé.

La méthode comprend une étape **S2** de refroidissement de l'air capté lors de l'étape **S1,** de manière à en faire condenser l'humidité. Le refroidissement de l'air capté est effectué au moyen de la zone de condensation **B** telle que décrite ci-dessus. En particulier, l'air est refroidi au contact d'une surface de condensation **B1** dont la température est inférieure ou égale à une température de condensation **TC.**

La méthode comprend une étape **S3** de collecte de l'eau d'irrigation dans une zone de collecte (stockage) **C.** L'eau d'irrigation provient en particulier du refroidissement de l'air capté lors de son passage dans la zone de condensation **B.** L'eau d'irrigation provient également de l'évapotranspiration des cultures. L'eau d'irrigation peut en outre provenir d'autres sources telles que les eaux de pluies ou de ruissellement.

La méthode comprend en outre une étape **S4** d'irrigation. Lors de l'étape d'irrigation l'eau collectée lors de l'étape **S3** de condensation est distribuée à travers les cultures. L'irrigation peut être effectuée par écoulement au sol ou par aspersion au-dessus des cultures. L'irrigation peut s'effectuer au moyen d'une installation de pompage telle que celle décrite ci-dessus.

La méthode comprend en outre une étape **S5** de régulation thermique. Durant cette étape de régulation thermique, les zones de stockage thermique chaud **E1** et froid **E2** sont maintenues ou remises chacune à leur température respective. En particulier, la température de la zone de stockage thermique chaud **E1** est comprise entre 20°C et 25°C et la température de la zone de stockage thermique froid **E2** est maintenue entre 4°C et 8°C. L'étape **S5** de régulation thermique peut être effectuée notamment grâce à une pompe à chaleur de type eau/eau. La pompe à chaleur est préférentiellement réversible.

Les étapes **S1** de captage, **S2** de condensation et **S3** de collecte peuvent être simultanées. Elles forment ensemble un cycle de condensation, basé sur le transit de l'air capté dans la zone de captage **A** puis rejeté vers l'extérieur après avoir traversé la zone de collecte C. Le cycle de condensation est effectué de sorte à ce que l'air capté dans la zone de captage **A** ne soit pas en contact direct avec les cultures. Les parois internes **P1** et **P2** permettent à ce titre de canaliser l'air vers la zone de condensation **B.**

L'étape **S4** d'irrigation peut être concomitante aux étapes **S1** de captage, **S2** de condensation et **S3** de collecte. L'étape d'irrigation peut alternativement être différée par rapport à ces étapes formant le cycle de condensation. L'étape d'irrigation peut être initiée en cas de nécessité suivant des paramètres tels que la température et le degré d'hygrométrie ou un mélange de ces paramètres. Alternativement, l'étape d'irrigation peut être continue.

L'étape **S5** de régulation thermique peut être alternée avec les étapes formant le cycle de condensation. En particulier, les étapes **S1** de captage, **S2** de condensation et **S3** de collecte peuvent être effectuées durant les périodes ensoleillées, quand la température de l'air extérieur **TE** est supérieure à une température seuil **TS.** L'étape **S5** de régulation thermique permet de restaurer ou de maintenir les stocks thermiques des zones de stockage thermique chaud **E1** et froid **E2.** Cette étape s'effectue de préférence durant la nuit. Il n'est cependant pas exclu que la pompe à chaleur soit mise en fonction durant le cycle de condensation. Ainsi l'étape **S5** est concomitante aux étapes formant le cycle de condensation.

La méthode de régulation thermique peut être implémentée de manière automatisée ou partiellement automatisée au moyen d'une unité de commande **UC** reliée aux organes de la serre, tels que la pompe à chaleur ou les ventilateurs de captage d'air **A3,** et à au moins un capteur. Le capteur peut être un thermomètre, un hygromètre, un débitmètre, une jauge ou tout autre type de capteur.

Un ou plusieurs des organes du système de culture **1** peuvent être alimentés en électricité grâce aux panneaux solaires **A1.**

### Numéros de référence employés sur les figures

- 1: Serre
- A: Zone de captage
- A1: Panneaux solaires
- A2: Conduite d'air
- A3: Ventilateur
- B: Zone de condensation
- B1: Surface de condensation
- B2: Couche isolante
- B3: Réserve d'eau froide
- B4: Couche isolante
- C: Zone de collecte
- C1: Eau d'irrigation
- C2: Installation de pompage
- D: Zone de culture
- E: Zone de stockage thermique
- E1: Zone de stockage thermique froide
- E2: Zone de stockage thermique chaude
- E3: Pompe à chaleur
- P1, P2: Parois intérieure
- PE: Paroi extérieure
- TC: Température de condensation
- TE: Température extérieure
- TS: Température seuil
- TP1: Température plafond

## Revendications

1. Système de culture (1) comprenant une paroi extérieure (PE), délimitant une zone de captage (A) permettant de capter l'air extérieur, une zone de condensation (B) permettant de refroidir l'air capté et d'en condenser l'humidité, une zone de collecte (C) permettant de collecter l'eau de condensation, et une zone de culture (D),
**caractérisée en ce que** la zone de culture (D) est en contact direct avec la zone de condensation (B) et séparée de la zone de captage (A) délimitée par une paroi (P1) interne au système de culture et la paroi extérieure (PE) et de la zone de collecte (C) délimitée par une paroi (P2) interne au système de culture et la paroi externe (PE), la zone de culture (D) étant disposée entre la paroi interne (P1) et la paroi interne (P2).

2. Système de culture selon la revendication 1, **caractérisé en ce que** la partie supérieure de la paroi (P1) est ajourée ou manquante, de manière à laisser passer l'air capté depuis la zone de captage (A) vers la zone de condensation (B), de sorte à maintenir une surpression dans la zone de captage (A).

3. Système de culture selon les revendications 1 ou 2, **caractérisé en ce que** la zone de condensation (B) comprend une surface de condensation (B1), disposée sur le parcours de l'air capté dans la zone de captage (A), inclinée vers la zone de collecte (C), et disposée au-dessus de la paroi (P2).

4. Système de culture selon la revendication 3, **caractérisé en ce que** la surface de condensation (B1) correspond à la surface inférieure d'un réservoir de fluide thermique dont la température est maintenue égale ou inférieure à une température de condensation (TC).

5. Système de culture selon l'une ou l'autre des revendications précédentes, **caractérisé en ce que** la partie de la paroi extérieure (PE) en regard de la zone de condensation comprend une couche isolante (B2).

6. Système de culture selon l'une ou l'autre de revendications précédentes, **caractérisé en ce que** le pourtour du système de culture (1) est pourvue de panneaux photovoltaïques (A1).

7. Système de culture selon l'une ou l'autre des revendications précédentes, **caractérisé en ce que** la zone de collecte (C) est pourvue de conduites d'évacuation d'air (C4) permettant d'évacuer l'air capté dans la zone de captage (A) et refroidi dans la zone de condensation (B).

8. Système de culture selon l'une ou l'autre des revendications précédentes, **caractérisé en ce que** la zone de collecte (C) comprend une installation de pompage (C2) permettant l'irrigation de la zone de culture (D).

9. Système de culture selon l'une ou l'autre de revendications précédentes, **caractérisé en ce qu'**il comprend une zone de stockage thermique (E), comprenant une zone de stockage thermique chaud (E1) et une zone de stockage thermique froid (E2), et une pompe à chaleur de type eau/eau.

10. Système de culture selon l'une ou l'autre des revendications précédentes, **caractérisé en ce qu'**il comprend une unité de commande (UC) et au moins un capteur permettant de déterminer au moins un paramètre environnemental, et **en ce que** l'unité de commande peut piloter de manière automatique ou semi-automatique l'une ou plusieurs de l'installation de pompage (C2), de la pompe à chaleur et du ou des ventilateurs (A3) de la zone de captage (A).

11. Procédé de culture autonome opéré au moyen du système de culture selon l'une des revendications 1 à 10, comprenant une étape (S1) de captage de l'air extérieur via une zone de captage (A), une étape (S2) de condensation par refroidissement de l'air extérieur via une zone de condensation (B) et une étape (S3) de collecte de l'eau résultant de la condensation via une zone de collecte (C), **caractérisé en ce que** l'air capté lors de l'étape (S1), puis refroidi lors de l'étape (S2) puis évacué lors de l'étape (S3) n'entre pas directement en contact avec les cultures.

12. Procédé selon la revendication 11, **caractérisé en ce qu'**il comprend une étape (S4) d'irrigation des cultures, pouvant être concomitante ou non concomitante aux étapes (S1), (S2) et (S3).

13. Procédé selon les revendications 11 ou 12, **caractérisé en ce qu'**il comprend une étape (S5) de régulation thermique effectué au moyen d'une zone de stockage thermique (E).

14. Procédé selon la revendication 13, **caractérisé en ce que** la zone de stockage thermique (E) comprend une zone de stockage thermique chaud (E1) et une zone de stockage thermique froid (E2) et que les températures respectives de zones de stockage thermique chaud (E1) et froid (E2) sont maintenues ou rétablies au moyen d'une pompe à chaleur eau/eau.

## Patentansprüche

1. Kultursystem (1) mit einer Aussenwand (PE), welche eine Auffangzone (A) zum Auffangen von Aussenluft, eine Kondensationszone (B) zum Kühlen der aufgefangenen Luft und Kondensieren der Feuchtigkeit daraus, eine Sammelzone (C) zum Sammeln des Kondenswassers und eine Kultivierungszone (D) abgrenzt,
**dadurch gekennzeichnet, dass** die Kultivierungszone (D) in direktem Kontakt mit der Kondensationszone (B) steht und von der Auffangzone (A) getrennt ist, die durch eine Wand (P1) innerhalb des Kultursystems und die Aussenwand (PE) abgegrenzt ist, und von der Sammelzone (C) getrennt ist, die durch eine Wand (P2) innerhalb des Kultursystems und der Aussenwand (PE) abgegrenzt ist, wobei die Kultivierungszone (D) zwischen der Innenwand (P1) und der Innenwand (P2) angeordnet ist.

2. Kultursystem gemäss Anspruch 1, **dadurch gekennzeichnet, dass** der obere Teil der Wand (P1) perforiert ist oder fehlt, um der aus der Auffangzone (A) aufgefangenen Luft den Durchgang zur Kondensationszone (B) zu ermöglichen, um so einen Überdruck in der Auffangzone (A) aufrechtzuerhalten.

3. Kultursystem gemäss Anspruch 1 oder 2, **dadurch gekennzeichnet, dass** die Kondensationszone (B) eine Kondensationsfläche (B1) umfasst, welche auf dem Weg der in der Auffangzone (A) aufgefangenen Luft, zur Sammelzone (C) geneigt und oberhalb der Wand (P2) angeordnet ist.

4. Kultursystem gemäss Anspruch 3, **dadurch gekennzeichnet, dass** die Kondensationsfläche (B1) der Unterseite eines Thermofluidbehälters entspricht, dessen Temperatur gleich oder niedriger als eine Kondensationstemperatur (TC) gehalten wird.

5. Kultursystem gemäss irgendeinem der vorhergehenden Ansprüche, **dadurch gekennzeichnet, dass** der der Kondensationszone zugewandte Teil der Aussenwand (PE) eine Isolierschicht (B2) aufweist.

6. Kultursystem gemäss irgendeinem der vorhergehenden Ansprüche, **dadurch gekennzeichnet, dass** der Umfang des Kultursystems (1) mit Photovoltaikanlagen (A1) versehen ist.

7. Kultursystem gemäss irgendeinem der vorhergehenden Ansprüche, **dadurch gekennzeichnet, dass** die Sammelzone (C) mit Luftableitungsrohren (C4) versehen ist, welche die Ableitung der in der Sammelzone (A) gesammelten und in der Kondensationszone (B) gekühlten Luft ermöglichen.

8. Kultursystem gemäss irgendeinem der vorhergehenden Ansprüche, **dadurch gekennzeichnet, dass** die Sammelzone (C) eine Pumpanlage (C2) umfasst, welche eine Bewässerung der Kultivierungszone (D) ermöglicht.

9. Kultursystem gemäss irgendeinem der vorhergehenden Ansprüche, **dadurch gekennzeichnet, dass** es eine Wärmespeicherzone (E), bestehend aus einer Zone für heisse Wärmespeicherung (E1) und Zone für kalte Wärmespeicherung (E2) sowie eine Wasser/Wasser-Wärmepumpe umfasst.

10. Kultursystem gemäss irgendeinem der vorhergehenden Ansprüche, **dadurch gekennzeichnet, dass** es eine Steuereinheit (UC) und mindestens einen Sensor umfasst, welcher die Bestimmung mindestens eines Umweltparameters ermöglicht, und dass die Steuereinheit eine oder mehrere der Pumpanlagen (C2), der Wärmepumpe und des Ventilators bzw. der Ventilatoren (A3) der Auffangzone (A) automatisch oder halbautomatisch steuern kann.

11. Autonomes Kulturverfahren, welches mit Hilfe des Kultursystems gemäss einem der Ansprüche 1 bis 10 betrieben wird, mit einem Schritt (S1) der Erfassung der Aussenluft über eine Auffangzone (A), einem Schritt (S2) der Kondensation durch Kühlung der Aussenluft über eine Kondensationszone (B) und einem Schritt des Sammelns des aus der Kondensation resultierenden Wassers über eine Sammelzone (C), **dadurch gekennzeichnet, dass** die während des Schrittes (S1) erfasste, dann während des Schrittes (S2) gekühlte und dann während des Schrittes (S3) abgeführte Luft nicht direkt mit den Kulturen in Kontakt kommt.

12. Verfahren gemäss Anspruch 11, **dadurch gekennzeichnet, dass** es einen Schritt (S4) zum Bewässern der Kulturen umfasst, welcher gleichzeitig oder nicht gleichzeitig mit den Schritten (S1), (S2) und (S3) erfolgen kann.

13. Verfahren gemäss Ansprüchen 11 oder 12, **dadurch gekennzeichnet, dass** es einen Schritt (S5) der Wärmeregulierung umfasst, welcher mittels einer Wärmespeicherzone (E) durchgeführt wird.

14. Verfahren gemäss Anspruch 13, **dadurch gekennzeichnet, dass** die Wärmespeicherzone (E) eine Zone für heisse Wärmespeicherung (E1) und Zone für kalte Wärmespeicherung (E2) umfasst, und dass die jeweiligen Temperaturen der heissen (E1) und kalten (E2) Wärmespeicherzonen mittels einer Wasser/Wasser-Wärmepumpe aufrechterhalten oder wiederhergestellt werden.

## Claims

1. Cultivation system (1) comprising an outer wall (PE) delimiting a capture zone (A) for capturing outside air, a condensation zone (B) for cooling the captured air and condensing its moisture, a collection zone (C) for collecting condensation water, and a cultivation zone (D),
**characterized in that** the cultivation zone (D) is in direct contact with the condensation zone (B) and separated from the capture zone (A) delimited by a wall (P1) internal to the cultivation system and the outer wall (PE) and from the collection zone (C) delimited by a wall (P2) internal to the cultivation system and the outer wall (PE), the cultivation zone (D) being arranged between the inner wall (P1) and the inner wall (P2).

2. Cultivation system according to claim 1, **characterized in that** the upper part of the wall (P1) is perforated or missing, so as to allow air captured from the capture zone (A) to pass through to the condensation zone (B), thereby maintaining positive pressure in the capture zone (A).

3. Cultivation system according to claims 1 or 2, **characterized in that** the condensation zone (B) comprises a condensation surface (B1), disposed on the path of the air captured in the capture zone (A), inclined towards the collection zone (C), and disposed above the wall (P2).

4. Cultivation system according to claim 3, **characterized in that** the condensation surface (B1) corresponds to the lower surface of a thermal fluid reservoir whose temperature is maintained at or below a condensation temperature (TC).

5. Cultivation system according to any one of the preceding claims, **characterized in that** the part of the outer wall (PE) facing the condensation zone comprises an insulating layer (B2).

6. Cultivation system according to any of the preceding claims, **characterized in that** the perimeter of the cultivation system (1) is provided with photovoltaic panels (A1).

7. Cultivation system according to any one of the preceding claims, **characterized in that** the collection zone (C) is provided with air exhaust pipes (C4) for exhausting the air captured in the capture zone (A) and cooled in the condensation zone (B).

8. Cultivation system according to any of the preceding claims, **characterized in that** the collection area (C) comprises a pumping installation (C2) for irrigating the cultivation area (D).

9. Cultivation system according to one of the preceding claims, **characterized in that** it comprises a thermal storage zone (E), comprising a hot thermal storage zone (E1) and a cold thermal storage zone (E2), and a water/water heat pump.

10. Cultivation system according to one of the preceding claims, **characterized in that** it comprises a control unit (UC) and at least one sensor for determining at least one environmental parameter, and **in that** the control unit can automatically or semi-automatically control one or more of the pumping installation (C2), the heat pump and the fan or fans (A3) of the collection area (A).

11. Autonomous cultivation method operated by means of the cultivation system according to one of claims 1 to 10, comprising a step (S1) of collecting outside air via a collection area (A), a step (S2) of condensing the outside air by cooling it via a condensation zone (B) and a step (S3) of collecting the water resulting from condensation via a collection zone (C), **characterized in that** the air captured in step (S1), then cooled in step (S2) and then discharged in step (S3) does not come into direct contact with the crops.

12. Method according to claim 11, **characterized in that** it comprises a step (S4) of irrigating the crops, which may or may not be concurrent with steps (S1), (S2) and (S3).

13. Process according to claims 11 or 12, **characterized in that** it comprises a step (S5) of thermal regulation carried out by means of a thermal storage zone (E).

14. Method according to claim 13, **characterized in that** the thermal storage zone (E) comprises a hot thermal storage zone (E1) and a cold thermal storage zone (E2) and that the respective temperatures of the hot (E1) and cold (E2) thermal storage zones are maintained or restored by means of a water/water heat pump.
